(19) Europäisches Patentamt
European Patent Office
Office européen des brevets

(11) EP 0 650 888 B1

(12) **EUROPEAN PATENT SPECIFICATION**

(45) Date of publication and mention of the grant of the patent:
**10.03.1999 Bulletin 1999/10**

(51) Int. Cl.$^6$: **B62M 23/02**

(21) Application number: **94117218.1**

(22) Date of filing: **31.10.1994**

# (54) Electrically assisted pedal operated vehicle

Pedalfahrzeug mit elektrischem Hilfsmotor

Véhicule à pédale assisté par moteur électrique

(84) Designated Contracting States:
**DE FR IT**

(30) Priority: **29.10.1993 JP 294140/93**
**29.10.1993 JP 294141/93**
**14.10.1994 JP 274347/94**

(43) Date of publication of application:
**03.05.1995 Bulletin 1995/18**

(60) Divisional application:
**98116229.0 / 0 879 757**

(73) Proprietor:
**YAMAHA HATSUDOKI KABUSHIKI KAISHA**
**Iwata-shi Shizuoka-ken, 438 (JP)**

(72) Inventors:
- **Ikuma, Katsumi**
  **Iwata-shi, Shizuoka-ken, 438 (JP)**
- **Nagai, Sueji**
  **Iwata-shi, Shizuoka-ken, 438 (JP)**
- **Ito, Fumio**
  **Iwata-shi, Shizuoka-ken, 438 (JP)**
- **Miyata, Shoichiro**
  **Iwata-shi, Shizuoka-ken, 438 (JP)**
- **Suganuma, Yasuo**
  **Iwata-shi, Shizuoka-ken, 438 (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 517 224**
**EP-A- 0 569 954**
**EP-A- 0 590 674**
**WO-A-93/05977**
**US-A- 5 357 181**

- **PATENT ABSTRACTS OF JAPAN vol. 16 no. 99 (M-1220) ,11 March 1992 & JP-A-03 277101 (TOYOTA MOTOR CORP.) 9 December 1991,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 650 888 B1

Printed by Xerox (UK) Business Services
2.16.7/3.6

## Description

The present invention relates to an electrically assisted pedal operated vehicle, in particular a bicycle, comprising a human power drive system and an electrical drive system provided in parallel to each other, wherein an output of said electric drive system is controlled in compliance with changes in the output of the human power drive system and an actual driving condition detecting means comprising a human power detection means and a vehicle speed detection means.

Such vehicles, for example, bicycles, which comprise a man power drive system and an assistant electric drive system in parallel to each other such as, for example, shown in EP-A2-0 517 224 or shown in post-published European patent applications EP-A-0 569 954 (18.11.93) and EP-A-0 590 674 (6.4.84) usually control the output of the electric drive system in dependency of the change in the pedal depressing force of the man power drive system. Accordingly, the arrangement alleviates the burden on the human effort by increasing the electric assist motor drive force in proportion to the magnitude of the human power such as pedal depressing force. Thus, the detection of the actual driving conditions of the vehicle, in particular in terms of the pedal depressing force (or under additional consideration of the vehicle speed) the actual driving conditions were detected to derive a target value for the desired electrical power assist.

In order to detect the actual driving conditions of the vehicle it is advantageous to detect also the vehicle speed in addition to the detection of the pedal force of the rider.

In such cases, for an appropriate control of the electrical power assist the reliability of the vehicle speed sensor is very important. For example, when the electrical connection of the weak speed sensor becomes loose and disconnected during running the sensor output will show an abnormal change in the vehicle speed and this change can be discriminated as sensor anomaly.

However, if the sensor output is zero from the beginning because, for example, of breakage of the connection cord of the vehicle sensor, it is impossible to discriminate whether the vehicle speed is zero or the vehicle speed sensor has failed.

It is an objective of the present invention to provide an electrically assisted pedal operated vehicle as indicated above wherein the condition of the vehicle speed sensor of the vehicle speed detection means can be reliably evaluated, so that a faulty vehicle speed sensor can be discriminated from a normal operating one.

In order to perform the aforeindicated objective according to the present invention the above-indicated vehicle is improved in that it provides a control means which comprises a fail-safe means checking the function of the vehicle speed detection means.

According to a preferred embodiment of the present invention the fail-safe circuit of the control means comprises a comparator means issuing a timer start signal for a timer after disciminating the predetermined variation range of the human driving detected is exceeded while simultaneously the vehicle speed sensed does not exceed a certain predetermined value, wherein said timer starts summing up upon receiving said timer start signal and that an alarm means is provided to be triggered by an anomaly discrimination signal when the value is summed up by the timer exceed a predetermined threshold. By means of that preferred embodiment the timer starts if the range of variation of human driving power detected exceeds a predetermined value while simultaneously the vehicle speed is below a given value.

If that condition stays longer than a given period of time the vehicle speed detection means, specifically the vehicle speed sensor, is discriminated as having a fault by means of the above mentioned fail-safe means. Therefore, the faulty condition of the sensor is discriminated even if the output from the vehicle speed sensor remains unchanged before and after the power source was switched on.

According to yet another preferred embodiment of the present invention the control means comprises a calculating means for calculating at constant time intervals a target value for the amount of electrical power assist in response to the human driving power (and, preferrably, in response to the vehicle speed sensed) for driving the electric motor of the electrical drive system to approach the actual electrical power assist to said target value.

According to yet another preferred embodiment of the present invention a motor assist limiting means is also provided increasing or decreasing the amount of motor assist gradually at said constant intervals of time, while delimiting the amount of change of the target value between subsequent time intervals, in order to avoid the electrical power assist to follow abrupt changes in the human power driving force.

Thus, as the control means calculates the desired target value for the amount of electrical power assist at constant intervals in response to the human driving power appropriate power assist of the human pedal pressing force is assured. On the other hand, as the motor assist limiting means is provided for increasing or decreasing the amount of power assist gradually at said constant time intervals while avoiding excessive changes of the respective target values of electrical power assist between subsequent intervals the amount of motor assist changes smoothly even if the human drive force changes abruptly. As a result mechanical impacts to the drive system of the vehicle are reduced and the riding comfort and ride feeling are improved.

Moreover, considering the motor current of the electric motor of the electrical power assist system as the variable, which is adjusted in response to the actual driving conditions by means of the motor assist limiting means the motor current is prevented from increasing excessively at the time of starting and the battery of the electrical power assist system is prevented from deteriorating rapidly.

Other preferred embodiments of the present invention are laid down in the further subclaims.

In the following the present invention is explained in greater detail by means of a preferred embodiment thereof in conjunction with the accompanying drawings, wherein:

Fig. 1, is a bicycle with an electric motor according to an embodiment of the present invention,

Fig. 2, is a block diagram of the power train of the bicycle having a human power drive system and an assisting electrical drive system,

Fig. 3, is a functional block diagram of a control unit of the embodiment,

Fig. 4, is an operational flow chart of a run and stop control function,

Fig. 5, is an operational flow chart of a system protection function and a failure diagnosis function,

Fig. 6, is an operational flow chart of a start torque slide control of the control unit,

Fig. 7, is an operational flow chart of a power assist delimiting function of the control unit,

Fig. 8, is a diagram showing the change in the electrical assist power versus time,

Fig. 9, is an operational flow chart of a stop discrimination control of the control unit,

Fig. 10, is an operational flow chart of a battery low voltage checking function of the control unit,

Fig. 11, is an operational flow chart of a failure diagnosis of the vehicle speed sensor,

Fig. 12a, is a diagram showing the vehicle speed versus time, while,

Fig. 12b, shows a diagram of the pedal force of the operator versus time,

Fig. 13, is a functional block diagram of the failure diagnosis function of the control unit regarding the vehicle speed sensor.

An overall constitution of the vehicle body will be described in reference to FIGs. 1 through 3. FIG. 1 shows a main frame 10 comprising a down tube 14 extending down backward from a head pipe 12, a right and left pair of chain stays 16 (only one is shown) extending backward from the lower end of the down tube 14, a seat tube 18 and a right and left pair of auxiliary stays 20 (only one is shown) rising from the lower portion of the down tube 14 upward, and a right and left pair of back stays 22 (only one is shown) connecting the upper ends of the seat tube 18 and the auxiliary stays 20 to the rear ends of the chain stays 26.

A fork 24 is rotatably supported by the head pipe 12. A front wheel 26 is supported at the lower end of the fork 24. Bar handles 28 are attached to the upper and of the fork 24. A seat post 30 with a saddle 32 attached to the top is inserted from above into the seat tube 18 so as to be adjustbale in height.

A power unit 34 is integrally made up with a bottom bracket case 36 (hereinafter referred to as BB case) and a permanent magnet type dc electric motor 38. The BB case 36 is secured to the rear lower part of the down tube 14 by means of brackets 40 and 42. A crankshaft 44 passes through the BB case 36 of the power unit 34 with cranks 46 attached on both ends. Crank pedals 48 are attached to the cranks 46.

The power unit 34 includes gears and sprockets (not shown) for transmitting the rotation of the crankshaft 44 to a chain 52 through a one-way clutch (FIG. 2) on the crankshaft side. A planetary gear mechanism is interposed between the crankshaft 44 and the chain 52.

The pedal force is inputted to a planetary gear of the planetary gear mechanism and outputted from a ring gear to the chain 52. The pedal force F is detected by detecting the torque applied to a sun gear in the center by means of a pedal force detection mechanism consisting of a potentiometer. Rotation of the motor 38 is transmitted to the chain 52 through a planetary roller type speed reduction mechanism 56 and a one-way clutch 57 on the motor side.

A rear wheel 58 is attached to the rear end of the chain stays 16, namely at the joint between the chain stays 16 and the back stays 22. Here, the hub of the rear wheel 58 constitutes a freewheel 60 to be driven by the chain 52 in the forward direction only. FIG. 1 shows a chargeable battery 62 such as a lead acid battery vertically stacked and held in an elongate battery case 64.

A rotation sensor 66 is attached to the BB case 36 to detect the rotation speed of the sprocket (not shown) on which the chain 52 is wound. The rotation sensor 66 serves also as vehicle speed detection means for detecting the vehicle speed. A control unit 68 is attached to the front lower part of the down tube 14. The control unit 68 and the power unit 34 are covered by a cover 70.

The pedal force F detected by the pedal force detection mechanism consisting of a potentiometer and the vehicle speed S detected by the vehicle speed sensor 66 are inputted to the control unit 68 which controls the motor current according to the pedal force F and the vehicle speed S to produce a motor output or a motor torque $T_M$.

The control unit 68 is constituted as shown in FIG. 3. The motor 38 and the battery 62, together with a switching circuit 72, constitute a closed circuit. This closed circuit is a main circuit 74. The switching circuit 72 is constituted for instance with a MOS-FET. A flywheel diode 76 is connected in parallel to the motor 38. A shunt 78 for detecting current is attached to the main circuit 74.

A CPU 80 outputs a command value (i) for the output (torque) $T_M$ of the motor 38 according to the pedal force F and the vehicle speed S. In other words, the CPU issues the command value so that the output (torque) $T_M$ of the motor 38 is changed periodically in synchronism with the periodical changes in the pedal force. It may also be arranged that the vehicle speed S is restricted by restricting the motor output $T_M$ when a given vehicle speed S is reached.

A gate circuit 82 outputs a gate signal (g) for driving the switching circuit 72 corresponding to the command value (i) for variable duty ratio supplied from the CPU 80. In other words, to increase the motor output $T_M$, the ratio of on time to the total of on time and off time (called a duty ratio) of the command value (i) is increased.

The gate signal (g) issued by the gate circuit 82 according to the command value (i) is sent to a switching element of the switching circuit 72 to selectively turn each switching element on and off.

A main key switch 84 is shown in FIG. 3. When the main switch 84 is turned on, the CPU 80 turns on the main relay 86 intervening in the main circuit 74, and at the same time, brings a power source section 88, an auxiliary device control section 90, the gate circuit 82, and all parts of the control unit 68 into starting state. The power source section 88 produces a power source voltage for the CPU 80 and a drive voltage for the auxiliary devices 92 by stepping down the voltage of the battery 62 for running by means of a switching regulator for instance.

Here, it may also be arranged that another small capacity battery (not shown) is connected to the power source section 88 and charged by current stepped down from the running battery 62. The auxiliary devices 92 includes lamps and meters driven by the power from the power source section 88 according to the command of the auxiliary device control section 90.

The function of the CPU will be described below in reference to FIGs. 3 through 13. The CPU has various functions operating according to software. These functions are roughly divided into the following four as shown in FIG. 3. They are; a run and stop control function 100, a stop process function 102, a system protection function 104, and a trouble diagnosis function 106. The system protection function 104 and the trouble diagnosis function 106 are repeated at suitable timings while the CPU 80 is performing other processes, and processed for instance about every 10 milliseconds. FIG. 4 is a flow diagram roughly showing the operation of the run and stop control function 100 and the stop process function 102. FIG. 5 is a flow diagram roughly showing the operation of the system protection function 104, and the trouble diagnosis function 106.

The run and stop control function 100 performs various operations from start to stop discrimination according to turning the main key switch 84 on. This is repeated for instance about every 10 milliseconds. The contents of the function 100 will be described below for each function.

First, the start discrimination function 110 will be described. This function 110 discriminates an intention of a start being shown when the pedal force F exceeds a given value $F_0$ (for instance 30 kg), and moves on to the run control state by way of a start torque slide control function 120 which will be described below.

The start torque slide control 120 is for cancelling the result of the start discrimination when the vehicle speed S remains zero for a given period of time (3 seconds for instance) after the start intention is discriminated as shown by the start discriminating function 110. An example of such a case is that a pedal force is applied while brake is applied to prevent starting. If the motor 38 is driven in that case in a similar manner as in normal running, an excessive current will continue to flow in the motor 38 to accelerate depletion of the battery 62 and to put a large load on the drive system. That is the reason to interrupt the start after a given period of time.

When the vehicle remains stopped under the condition of a constant pedal force being applied, as in the case a pedal force is applied under the condition of the front wheel being pressed against a wall, it is not desirable that a motor current flows repeatedly at constant time intervals. In view of this, this embodiment is arranged to increase the given value for discriminating the start (start discrimination pedal force reference value $F_0$) by a constant value $\alpha$ every time the start discrimination is made.

FIG. 6 is a flow diagram of the above. Since this embodiment is arranged so that the start waiting mode is automatically set when the main key switch is turned on while the vehicle is at rest or driven by the human power only, it is discriminated as the start waiting mode in the step 110A. This start waiting mode discriminating step 110A is for discriminating whether or not the current mode is the one waiting for a start. If the mode is waiting for the start, the intention of start is discriminated as present when the pedal force F is equal to or greater than $F_0$ (step 110B). If $F \geq F_0$, the motor assist is started and at the same time the mode is set to the gentle starting mode (step 110D). Next the process proceeds to the start torque slide control 120. In this control 120, first the timer is started (step 120). If the mode is not the start waiting mode, it means that the vehicle is already running and therefore the process bypasses the start discrimination 110 and the start torque slide control 120, and proceeds to the next process of the gentle starting 130.

The vehicle speed S is checked if it is zero or not (step 120B). If S = 0, then the timer is checked if its time count (t) has reached a given value $t_0$ (for instance 3 seconds) (step 120C). If S is not zero, it is discriminated that actual running has been started, and the start discrimination function is finished without changing the value of $F_0$ (step 120D).

If the time t has reached $t_0$, it is controlled so that the reference value $F_0$ is increased to $F_0 + \alpha$ (step 120E), and to stop the motor assist. The process returns to the start waiting mode (step 102). If the time t has not reached $t_0$, the process returns to the step 120B to check the vehicle speed S if it is zero or not. If $F \geq F_0$ while the pedal force remaining applied, it is again discriminated as the start being intended (step 110B), and the motor assist is started (step 110D). After this operation is repeated for (n) times and if $F \leq F_0 + n\alpha$, the motor assist is not made any more (step 110B).

If the assist amount (hereinafter referred to as target assist amount) as calculated is suddenly given when the motor assist is started, a rush current flows to the motor like a big shock. Therefore, a gentle start function 130 is provided to smoothly increase the assist amount given as an actual command value (hereinafter referred to as actual assist amount). Namely, 10% of the actual assist amount is added to the actual assist amount at constant time intervals (for instance 0.015 seconds) and, when the target assist amount is reached, the process sets to the running mode, and proceeds to the run control 140.

In the run control 140 for ordinary running, an optimum assist amount is calculated in consideration of the vehicle speed S, pedal force F, power source voltage, and motor current, and the assist amount is renewed at constant time intervals (for instance 0.01 seconds). In that case, the amount of change from the previous assist amount is restricted to provide a smooth assist feeling. Namely as shown in FIG. 4, an assist power restricting function (step 140A) is provided.

FIG. 7 is an operation flow chart of the assist power restricting function 140A and FIG. 8 is a diagram showing an example of changes in the assist power with time. Since this embodiment controls the motor current by PWM, when the motor current is expressed by the duty D%, control is performed so that target duty D (equivalent to the target assist amount; duty is equivalent to assist amount in the following description) does not change in excess of a given value (for instance 10%).

Referring to FIG. 7, a current duty $D_N$ and a target duty $D_{N-1}$ preceding by a time $\tau$ are stored (step 140B), and if the duty D is increasing (step 140C), the duty $D_{N-1}$ is increased by 10% and the result is deemed as D1 (step 140D). If $D_N < D_1$, increase in $D_N$ is not greater than 10% (step 140E) and it is assumed as $D_2 = D_N$ (step 140E) and the $D_2$is deemed as the target duty to control the motor output (step 140G). Then assuming the $D_2$ as the previous $D_{N-1}$, the process returns to the step 140B.

If $D_N$ is equal to or greater than $D_1$ in the step 140D, it means that the increase in the target duty is 10% or more. Then it is made that $D_2 = D_1$ (step 140I) and control is performed with the $D_2$ as a target duty.

If the target duty is decreasing (step 140C), the previous target duty $D_{N-1}$ is reduced by 10% and the result is used as $D_1$ (step 140J). If $D_N > D_1$ (step 140K), the decrease is less than 10%. Therefore, $D_N$ is used as the target duty $D_2$ (step 140L). If $D_N \leq D_1$, the decrease is not less than 10%, and the $D_1$ is used as a target duty $D_2$ (step 140M).

The above process is shown in FIG. 8 with solid lines A. The phantom lines B show changes in the duty D when control by the assist power restricting means 140A is not performed. In this way, the increase and decrease in the motor current is smoothed by the use of the control 140A. As a result, ride feeling is improved and shocks to the drive system are reduced. At the time of starting in particular, current is restricted to a moderated value even at low motor speeds to prevent the battery from deteriorating rapidly. This run control also restricts the motor assist ratio at high speeds. To do that, the assist ratio may be set to a small value on map defining the assist ratio relative to the vehicle speed S and the pedal force F.

In this embodiment, intention of a stopis discriminated by the use of the pedal force F and the vehicle speed S without using a brake switch.

First, when the vehicle speed is zero (step 150A), if the pedal force is less than a given value $F_1$ (corresponding to 12 kg, or a torque of about 2 kg-m, for instance) (step 150B), the timer is started (step 150C). If the timer is already counting, the counting is allowed to continue (step 150D). When the accumulated value t of the timer reaches a given value $t_0$ (1 second for instance) (step 150E), the process proceeds to a stop process to make the motor output zero (step 102F).

When it is not $F < F_1$ (step 150B) and F is not less than $F_2$ ($F_2$ is greater than $F_1$, 30 kg for instance) (step 150G), other timer is started (step 150I) when variation width $\Delta F$ of the pedal force F is not greater than a given value $\Delta F_0$ (12 kg for instance) (step 150H). If the timer is already counting, the counting is allowed to continue (step 150J). When the accumulated value $t_1$ continues for a give value $t_{10}$ (2 seconds for instance), intention of stop is discriminated as present (step 150J). The timer is reset when the vehicle speed S is not zero (step 150A), or the above conditions are not met (step 150L), and the process returns to the step 10. At this time, the mode is retained as it is.

When the intention of a stop is discriminated as present as described above, the process proceeds to a stop process (step 102) to decrease the motor output gradually, and prepares for the next start, or wait for the next input of the pedal force F by setting the process to the start waiting mode. When there is no input signal from outside such as the pedal force F and the vehicle speed S for more than a given period of time, the process proceeds to an energy saving mode. For instance, the gate circuit 82, main relay 86, power source section 88 are deenergized, and the CPU 80 stops operating except for the function of discriminating the presence of external inputs.

The system protection function 104 will be described below. As shown in FIG. 5, this function consists of a battery overvoltage checking function 160, a battery low voltage checking function 170, and a low power consumption mode discrimination function 180.

The battery overvoltage checking 160 is for protecting the system as when the battery is replaced with one of a higher voltage by modification. Namely, when the main key switch 84 (FIG. 3) is turned on, the battery voltage is checked if it is higher than a given value. If higher, the control is stopped to restrict the running to proceed to the energy saving mode. In this way, running during charging is securely prevented. It is desirable to enhance safety so that the running is disabled unless the main key switch 84 is turned off, even if the battery voltage recovers normal level under that condition.

The battery low voltage checking function 170 is for protecting the battery from discharging excessively when the battery voltage lowers excessively. The battery voltage, even if it lowers excessively during running, recovers and rises when the discharge current is shut off by stopping the control. Therefore, the control becomes possible again. However, the battery deteriorates because of excessive discharge. Therefore, it is preferable to check the voltage without load immediately after turning on the main key switch 84, and to issue an alarm if the voltage is lower than a preset value.

The battery low voltage checking function 170 may also be as shown in FIG. 10. Namely the battery voltage $V_B$ is compared with two threshold values $V_{th1}$ and $V_{th2}$ ($V_{th1} < V_{th2}$) (steps 170A, 170B). If $V_B$ is not greater than $V_{th1}$, an LED is lit up and the timer is started (step 170C). When the timer count reaches an accumulated time $t_{20}$ (for instance 5 seconds) (step 170D), entire control is stopped (step 192).

If $V_B$ is between $V_{th1}$ and $V_{th2}$ (steps 170A, 170B) the LED flashes as an alarm (step 170F). If $V_B$ is not less than $V_{th2}$, there is no problem with the battery voltage and therefore other control is performed (step 170G).

As described above, then the voltage $V_B$ is not greater than $V_{th1}$, the vehicle is prevented from stopping suddenly by arranging that the control is stopped not immediately but after a given period of time during which the LED is lit up. For instance, it is conceivable that when the vehicle is started at an intersection, the voltage lowers and the LED lights up before finishing crossing the intersection. Even in such a case, running can be continued within the timer set period of $t_{20}$ to finish crossing the intersection.

The low power consumption mode discriminating function 180 is for discriminating the energy saving mode described before. When the vehicle is at rest (S = 0) and the input signal for the vehicle speed S is not made continuously for more than a given period of time (5 minutes for instance), the process is brought to the energy saving mode. In this mode, as described before, the gate circuit 82, main relay 86, power source section 88 are deenergized, and the CPU 80 stops operating except for the function of discriminating the presence of external inputs.

The fail-safe means providing a trouble diagnosis function 106 searches for various troubles and failures and if any trouble exists an alarm is issued (step 190) in a similar manner as the steps 160 and 170 to stop the control (step 192). In the control stop step 192, the main relay 86 is turned off, and the CPU stops all of its functions except for the alarm process and the low power consumption mode discriminating function. Fig. 11 is a flow chart showing the trouble detecting function of the vehicle speed sensor 66 as an example of the trouble diagnosis function 106, and Fig. 12 is an explanatory diagram of the operation.

The failure detection of the vehicle speed sensor 66 is the discrimination of the absence of output of the vehicle speed sensor 66 before and after starting. In other words, when this process starts (step 106A) and the output of the vehicle speed sensor (vehicle speed S) is zero (step 106B), the variation width $\Delta F$ of the pedal force F is detected (step 106C). The variation width $\Delta F$, as shown in FIG. 12, is obtained from the differences between the pedal forces $F_n$ and $F_{n+1}$ or $\Delta F_n = F_{n+1} - F_n$ detected at constant time intervals $\tau_1$. The time $\tau_1$ is set to 0.5 seconds for instance.

The difference $\Delta F_n$ is compared with a constant value $\Delta F_0$ (step 106D). If $\Delta F_n \geq \Delta F_0$, the timer is started (step 106E) and when its accumulated value $t_3$ reaches a given value $t_{30}$, the vehicle speed sensor 66 is discriminated as having a trouble (step 106G). Then an alarm is issued and the timer is reset. The control is stopped (step 192). When the vehicle speed S becomes not zero before the accumulated timer count $t_3$ reaches $t_{30}$ (step 106B), or $\Delta F < \Delta F_0$ (step 106D), it is discriminated as absence of trouble, and the timer is reset (step 106I), and the process proceeds to other control (step 106J).

As described above, even if the vehicle speed S is zero, the trouble in the vehicle sensor 66 is discriminated as present when the variation width $\Delta F$ is greater than a given value. Therefore, the trouble is detected even if the output from the vehicle speed sensor 66 is not present because of wire breakage or the like. If no trouble is detected after finishing the trouble diagnosis 106 as described above, the process proceeds to other normal control (step 194, FIG. 5).

The trouble diagnosis function 106A of the vehicle speed sensor 66 may be constituted as shown in the block diagram of FIG. 13. Namely the vehicle speed S detected by the vehicle speed detection means consisting of the vehicle speed sensor 66 is discriminated if the S = 0 or not by a vehicle speed dicrimination means 200. The numeral 202 denotes means for detecting variation width of the pedal force F. The variation width $\Delta F$ obtained here is inputted to a variation width comparison means 204 when the vehicle speed S is zero, compared with a given value $\Delta F_0$. When $\Delta F > \Delta F_0$, a timer start signal $T_s$ is issued.

A timer 206 is reset by the start signal $T_s$ and starts counting time. The timer 206 issues a trouble discrimination signal I when the accumulated time count reaches a given time $t_{30}$. The trouble discrimination signal I is stored in a buffer memory 208 and at the same time causes an alarm means 210 to issue an alarm, and causes a stop process means 212 to stop the control. It also resets the timer 206.

While the target assist amount calculated according to the pedal force F or to both pedal force and vehicle speed is represented by the duty in the assist force restricting means 140A of this embodiment and it is arranged that the amount of change at every time interval is restricted within 10%, this invention is not limited to this embodiment. It may also be arranged that the amount of change in the target assist amount is restricted within a given rate of the motor drive torque, or the amount of change in the duty or torque is set within a numerically determined range.

In this embodiment, the variation width is taken as the difference $\Delta F$ between two consecutive detected values of the pedal force F detected at constant time intervals $\tau_1$ when the trouble of the vehicle speed sensor 66 is to be detected. However, this invention is not limited to this embodiment. For instance, the variation width may also be taken as the difference between maximum and minimum values of the pedal force within a variation period. This invention may also be applied to vehicles other than the bicycle, such as a wheelchair and a hand-pushed cart. In that case, the human drive power is the manual force.

## Claims

1. Electrically assisted pedal operated vehicle, in particular a bicycle, comprising a human power drive system and an electrical drive system provided in parallel to each other wherein an output of said electric drive system is controlled in compliance with changes in the output of the human power drive system and an actual driving condition detecting means including human power detection means and vehicle speed detection means, **characterised in that** a control means (68) is provided comprising a fail-safe circuit (106) checking the function of the vehicle speed detection means (66).

2. Electrically assisted pedal operated vehicle as claimed in claim 1, **characterised in that** the fail-safe circuit (106) comprises a comperator means issuing a timer start signal for a timer (206) after discriminating that a predetermined variation range of the human driving power detected is exceeded under a condition that the vehicle speed sensed by the vehicle speed detection means (66) does not exceed a certain predetermined value, said timer (206) starting summing triggered by said timer start signal and that an alarm means (210) is provided to be triggered by an anomaly discrimination signal (I) when the timer-summed value exceeds a predetermined value.

3. Electrically assisted pedal operated vehicle as claimed in claims 1 or 2, **characterised in that** the human driving power is detected at predetermined constant time intervals.

4. Electrically assisted pedal operated vehicle as claimed in at least one of the preceeding claims 1 to 3, **characterised in that** the human driving power is a vehicle rider's driving force.

5. Electrically assisted pedal operated vehicle as claimed in at least one of the preceeding claims 1 to 4, **characterised in that** means are provided for detecting the range of variation of the human driving power detected by the human power detection means.

6. Electrically assisted pedal operated vehicle as claimed in at least one of the preceeding claims 1 to 5, **characterised in that** the control means (68) comprises calculating means for calculating at constant time intervals a target value ($D_{N-1}$) for the amount of electrical power assist in response to the human driving power and for driving the electric motor (38) to approach the actual electric power assist to said target value ($D_{N-1}$).

7. Electrically assisted pedal operated vehicle as claimed in claim 6, **characterised in that** a motor assist limiting means is provided increasing or decreasing the amount of motor assist gradually at said constant time intervals while delimiting the amount of change of the target value ($D_{N-1}$) between successive time intervals.

8. Electrically assisted pedal operated vehicle as claimed in claim 6 or 7, **characterised in that** the range of variation is determined by the differences among the human driving forces detected at said constant time intervals by said variation range detection means.

9. Electrically assisted pedal operated vehicle as claimed in at least one of the preceeding claims 6 to 8, **characterised in that** the control means (68) calculates the target value ($D_{N-1}$) for the amount of electrical power assist in compliance with the output of the human power drive system and the vehicle speed detection means.

## Patentansprüche

1. Pedalfahrzeug mit elektrischem Hilfsmotor, insbesondere ein Fahrrad, das ein mit menschlicher Muskelkraft betriebenes und parallel dazu ein elektrisches Antriebssystem, wobei die Leistungsabgabe des elektrischen Antriebssystems entsprechend der sich ändernden Leistungsabgabe des menschlichen Antriebssystems geregelt wird, und eine Einrichtung zum Erkennen der tatsächlichen Antriebsbedingungen aufweist, wobei diese Einrichtung eine Einrichtung zum Erkennen der menschlichen Kraft und eine Einrichtung zum Erkennen der Fahrgeschwindigkeit umfaßt, **dadurch gekennzeichnet, daß** eine Regelungseinrichtung (68) vorhanden ist, die eine ausfallsichere Schaltung (106) zur Prüfung der Funktion der Fahrgeschwindigkeitserkennungseinrichtung (66) aufweist.

2. Pedalfahrzeug mit elektrischem Hilfsmotor nach Anspruch 1, **dadurch gekennzeichnet, daß** die ausfallsichere Schaltung (106) eine Komparatoreinrichtung aufweist, die ein Timerstartsignal an einen Timer (206) ausgibt, nachdem erkannt wurde, daß ein vorbestimmter Schwankungsbereich der menschlichen Antriebskraft unter der Bedingung überschritten wird, daß die von der Fahrgeschwindigkeitserkennungseinrichtung (66) festgestellte Fahrgeschwindigkeit einen bestimmten zuvor festgelegten Wert nicht überschreitet, wobei der Timer (206), ausgelöst durch das Timerstartsignal, hochzuzählen beginnt, und daß eine Alarmeinrichtung (210) vorhanden ist, die durch ein Anomalie-Unterscheidungssignal (I) ausgelöst wird, wenn der vom Timer hochgezählte Wert einen vorbestimmten Wert überschreitet.

3. Pedalfahrzeug mit elektrischem Hilfsmotor nach Anspruch 1 oder 2, **dadurch gekennzeichnet, daß** die menschliche Antriebskraft in konstanten vorbestimmten Zeitabständen erfaßt wird.

4. Pedalfahrzeug mit elektrischem Hilfsmotor nach zumindest einem der vorangehenden Ansprüche 1 - 3, **dadurch gekennzeichnet, daß** die menschliche Antriebskraft die Antriebskraft eines Fahrers ist.

5. Pedalfahrzeug mit elektrischem Hilfsmotor nach zumindest einem der vorangehenden Ansprüche 1 - 4, **dadurch gekennzeichnet, daß** Einrichtungen zum Erkennen der Schwankungsbreite der von der Erkennungseinrichtung für die menschliche Antriebskraft erkannten menschlichen Antriebskraft vorhanden sind.

6. Pedalfahrzeug mit elektrischem Hilfsmotor nach zumindest einem der vorangehenden Ansprüche 1 - 5, **dadurch gekennzeichnet, daß** die Regelungseinrichtung (68) Berechnungseinrichtungen zum Berechnen eines Zielwertes ($D_{N-1}$) für den Umfang der elektrischen Hilfskraft als Reaktion auf die menschliche Antriebskraft in konstanten Zeitabständen und zum Antreiben des Elektromotors (38) aufweisen, um die tatsächliche elektrische Hilfskraft an den Zielwert ($D_{N-1}$) anzunähern.

7. Pedalfahrzeug mit elektrischem Hilfsmotor nach Anspruch 6, **dadurch gekennzeichnet, daß** eine Hilfsmotorbegrenzungseinrichtung vorhanden ist, die den Umfang der Motorhilfskraft allmählich in den konstanten Zeitabständen erhöht oder vermindert und gleichzeitig das Ausmaß der Änderung des Zielwertes ($D_{N-1}$) zwischen aufeinandertolgenden Zeitabständen nicht begrenzt.

8. Pedalfahrzeug mit elektrischem Hilfsmotor nach zumindest einem der Ansprüche 6 oder 7, **dadurch gekennzeichnet, daß** der Schwankungsbereich durch die Differenzen zwischen den in den konstanten Zeitabständen von der Schwankungsbreitenerkennungseinrichtung erkannten menschlichen Antriebskräften bestimmt wird.

9. Pedalfahrzeug mit elektrischem Hilfsmotor nach einem der vorangehenden Ansprüche 6 bis 8, **dadurch gekennzeichnet, daß** die Regelungseinrichtung (68) den Zielwert ($D_{N-1}$) für den Umfang der elektrischen Hilfskraft in Übereinstimmung mit der Leistungsabgabe des menschlichen Antriebssystems und den Ausgaben der Fahrgeschwindigkeitserkennungseinrichtung berechnet.

## Revendications

1. Véhicule à pédale assisté électriquement, en particulier une bicyclette, comprenant un système d'entraînement par puissance humaine et un système d'entraînement électrique prévus parallèlement entre eux, dans lequel un signal de sortie dudit système d'entraînement électrique est commandé conformément aux changements de sortie du système d'entraînement par puissance humaine et des moyens de détection de conditions réelles d'entraînement incluant des moyens de détection de puissance humaine et des moyens de détection de vitesse du véhicule, caractérisé en ce que des moyens de commande (68) sont prévus, ceux-ci comprenant un circuit de sécurité intégrée (106) contrôlant le fonctionnement des moyens de détection de vitesse du véhicule (66).

2. Véhicule à pédale assisté électriquement selon la revendication 1, caractérisé en ce que le circuit de sécurité intégrée (106) comprend des moyens comparateurs émettant un signal de déclenchement d'horloge pour une horloge (206) après avoir déterminé qu'une plage de variation prédéterminée de la puissance humaine d'entraînement détectée est dépassée dans des conditions où la vitesse du véhicule captée par les moyens de détection de vitesse du véhicule (66) ne dépasse pas une certaine valeur prédéterminée, ladite horloge (206) commençant un comptage déclenché par ledit signal de déclenchement d'horloge et en ce que des moyens d'avertissement (210) sont prévus pour les déclencher par un signal de détermination d'anomalie (I) quand la valeur comptée par l'horloge dépasse une valeur prédéterminée.

3. Véhicule à pédale assisté électriquement selon la revendication 1 ou 2, caractérisé en ce que la puissance humaine d'entraînement est détectée à intervalles de temps constants prédéterminés.

4. Véhicule à pédale assisté électriquement selon au moins l'une des revendications précédentes 1 à 3, caractérisé en ce que la puissance humaine d'entraînement est une force d'entraînement de la personne montée sur le véhicule.

5. Véhicule à pédale assisté électriquement selon au moins l'une des revendications précédentes 1 à 4, caractérisé en ce que des moyens sont prévus pour détecter la plage de variation de la puissance humaine d'entraînement détectée par les moyens de détection de puissance humaine.

6. Véhicule à pédale assisté électriquement selon au moins l'une des revendications précédentes 1 à 5, caractérisé en ce que les moyens de commande (68) comprennent des moyens de calcul pour calculer à intervalles de temps constants une valeur voulue ($D_{N-1}$) comme quantité d'assistance de puissance électrique en réponse à la puissance humaine d'entraînement et pour entraîner un moteur électrique (38) afin de rapprocher l'assistance de la puissance électrique réelle de ladite valeur voulue ($D_{N-1}$).

7. Véhicule à pédale assisté électriquement selon la revendication 6, caractérisé en ce que des moyens de limitation d'assistance de moteur sont prévus, ceux-ci augmentant ou diminuant la quantité d'assistance du moteur graduellement auxdits intervalles de temps constants tout en délimitant la quantité de variation de la valeur voulue ($D_{N-1}$) entre des intervalles de temps successifs.

8. Véhicule à pédale assisté électriquement selon la revendication 6 ou 7, caractérisé en ce que la plage de variation est déterminée par les différences entre les forces humaines d'entraînement détectées auxdits intervalles de temps constants par lesdits moyens de détection de plage de variation.

9. Véhicule à pédale assisté électriquement selon au moins l'une des revendications précédentes 6 à 8, caractérisé en ce que les moyens de commande (68) calculent la valeur voulue ($D_{N-1}$) pour la quantité d'assistance de puissance électrique conformément à la sortie du système d'entraînement par puissance humaine et des moyens de détection de vitesse du véhicule.

FIG. 1

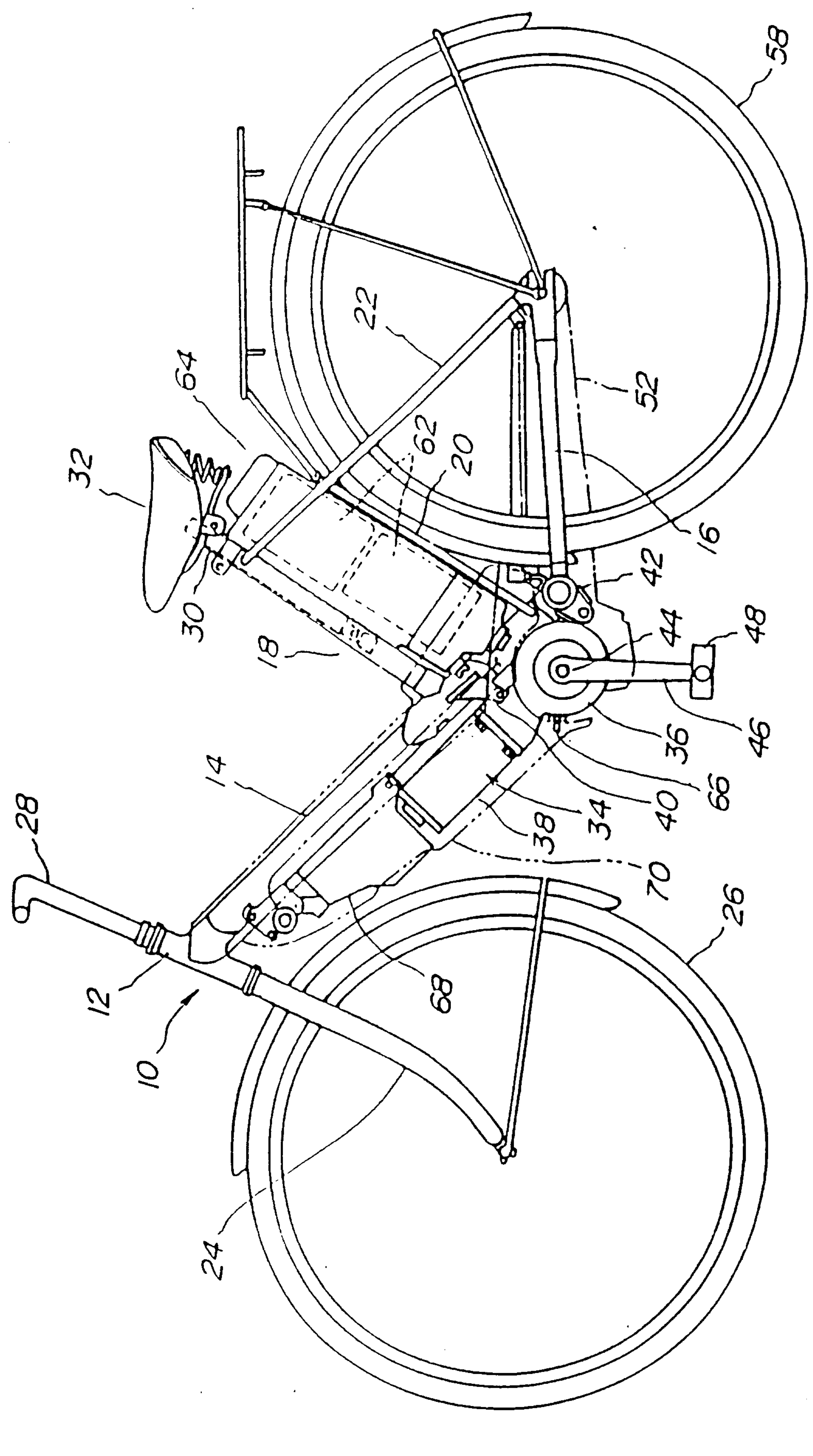
58
22
64
52
62
20
32
16
42
30
18
44
48
36
46
14
66
40
34
38
28
70
26
12
68
10
24

FIG. 2

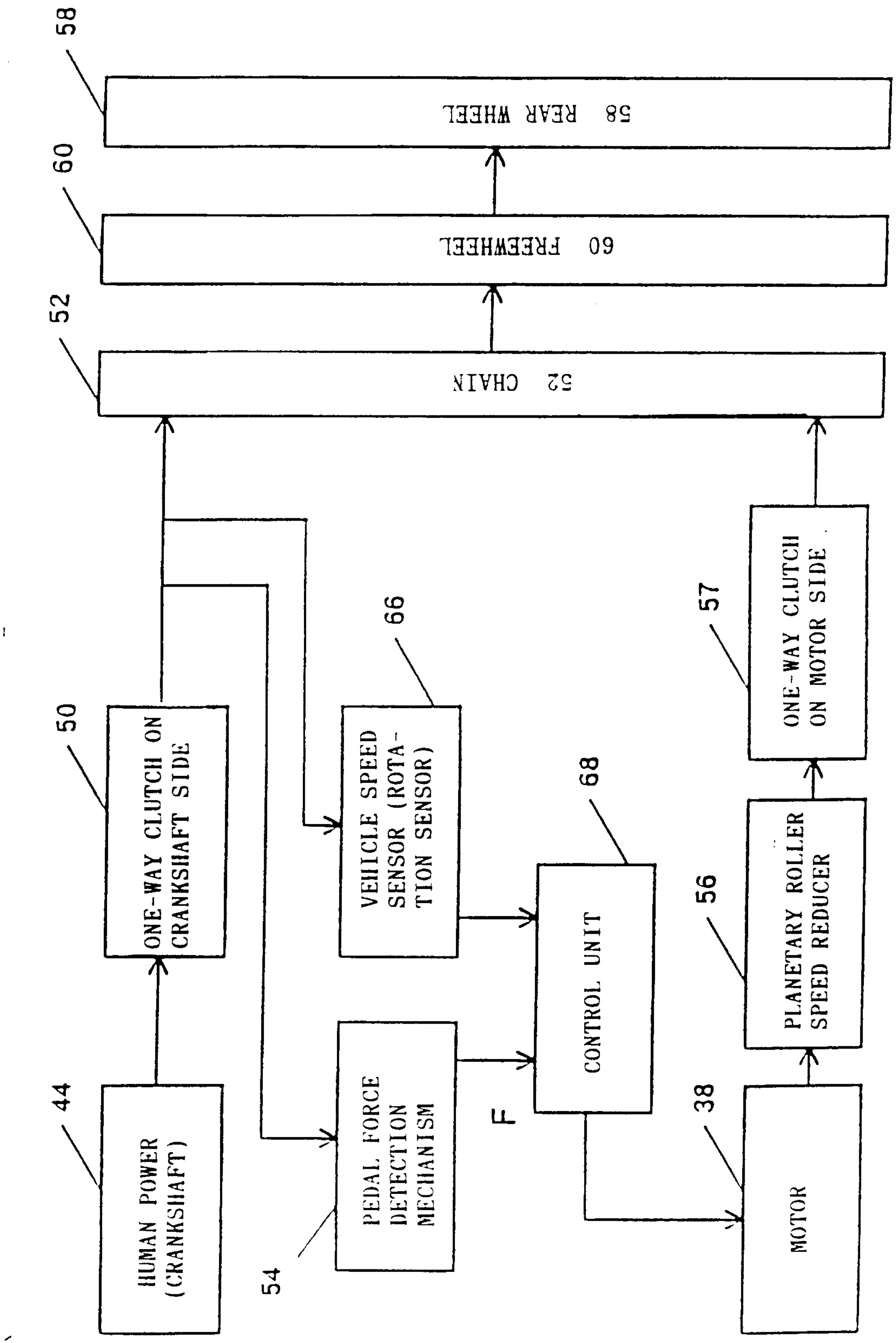
58 REAR WHEEL
60 FREEWHEEL
52 CHAIN
ONE-WAY CLUTCH ON CRANKSHAFT SIDE
VEHICLE SPEED SENSOR (ROTATION SENSOR)
ONE-WAY CLUTCH ON MOTOR SIDE
CONTROL UNIT
PLANETARY ROLLER SPEED REDUCER
HUMAN POWER (CRANKSHAFT)
PEDAL FORCE DETECTION MECHANISM
MOTOR
F
58
60
52
50
66
57
68
56
44
54
38

FIG. 3

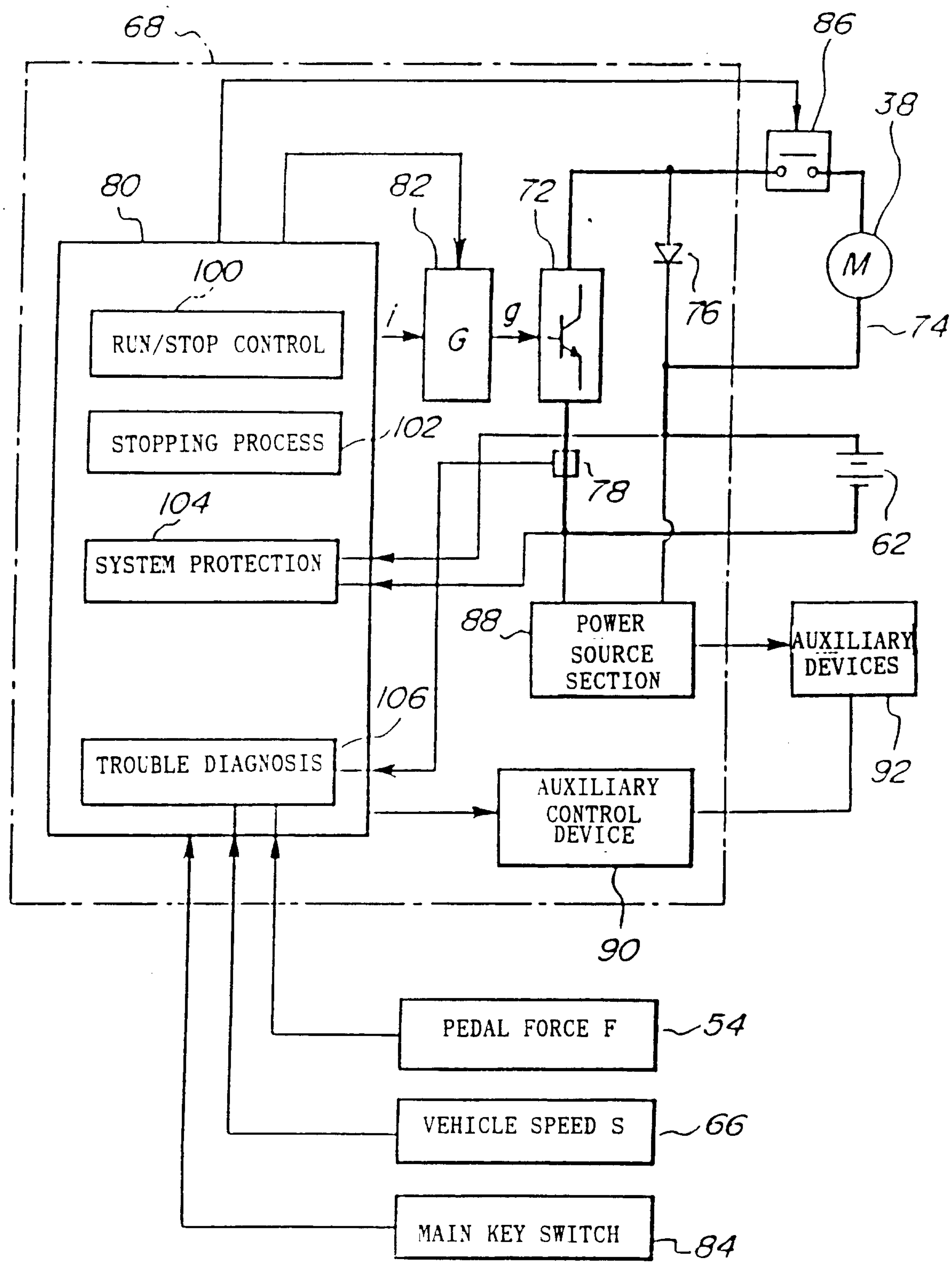
68
86
38
80
82
72
M
100
RUN/STOP CONTROL
i
G
g
76
74
STOPPING PROCESS
102
78
104
62
SYSTEM PROTECTION
88
POWER SOURCE SECTION
AUXILIARY DEVICES
106
92
TROUBLE DIAGNOSIS
AUXILIARY CONTROL DEVICE
90
PEDAL FORCE F
54
VEHICLE SPEED S
66
MAIN KEY SWITCH
84

FIG. 4

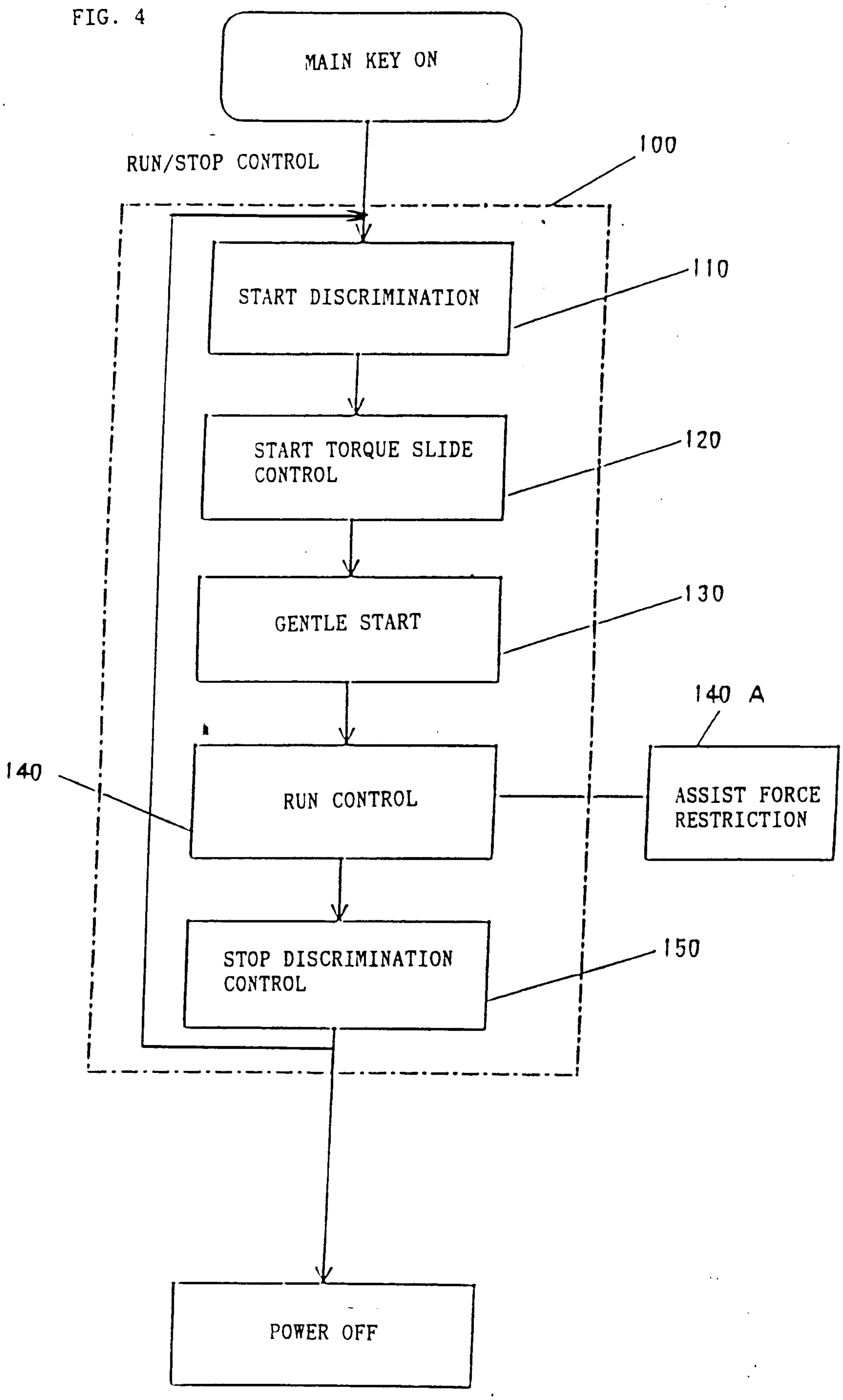
MAIN KEY ON
RUN/STOP CONTROL
100
START DISCRIMINATION
110
START TORQUE SLIDE CONTROL
120
GENTLE START
130
140 A
140
RUN CONTROL
ASSIST FORCE RESTRICTION
STOP DISCRIMINATION CONTROL
150
POWER OFF

FIG. 5

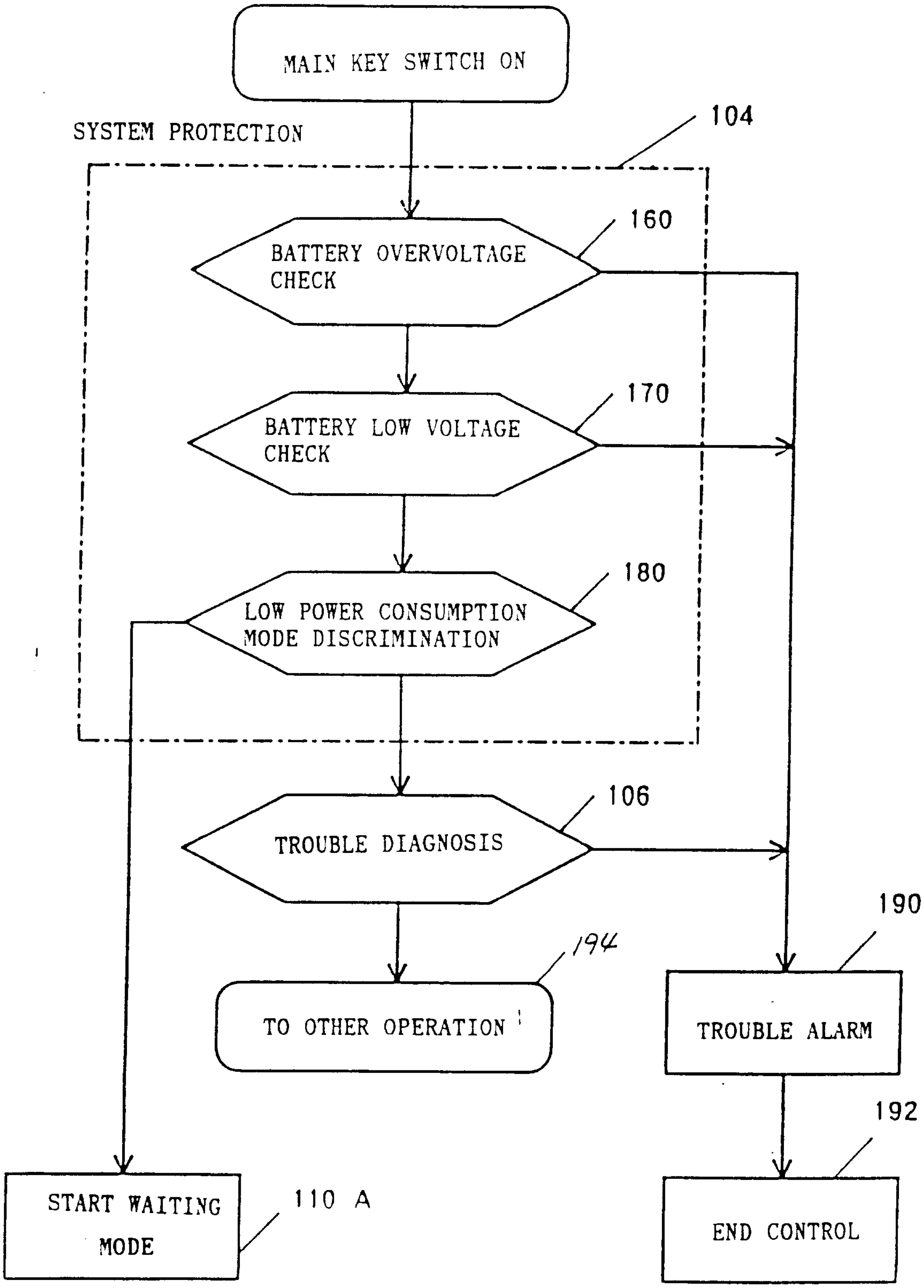
MAIN KEY SWITCH ON
SYSTEM PROTECTION
104
BATTERY OVERVOLTAGE CHECK
160
BATTERY LOW VOLTAGE CHECK
170
LOW POWER CONSUMPTION MODE DISCRIMINATION
180
TROUBLE DIAGNOSIS
106
194
TO OTHER OPERATION
190
TROUBLE ALARM
192
END CONTROL
START WAITING MODE
110 A

FIG. 6

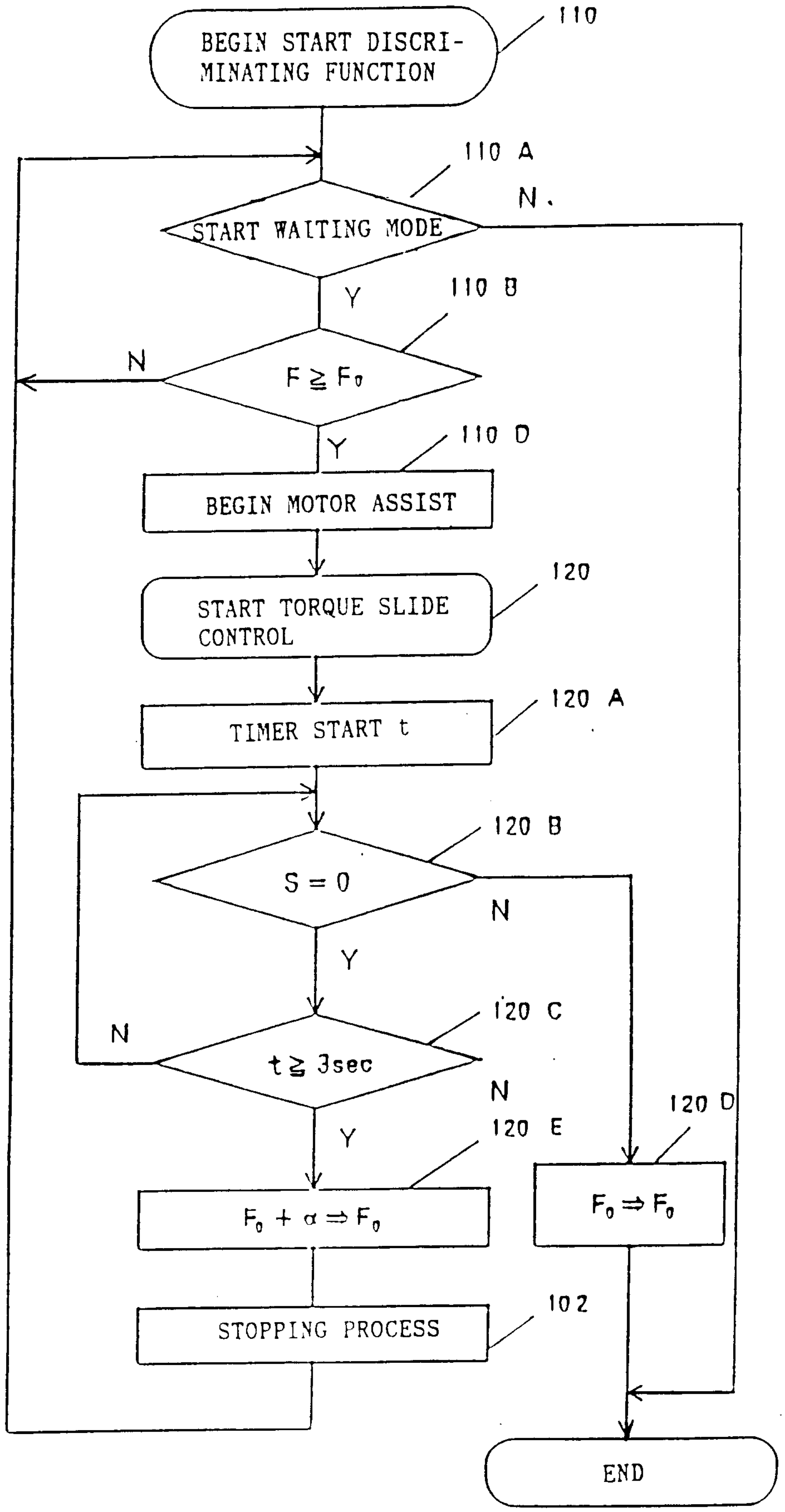
BEGIN START DISCRIMINATING FUNCTION
110
110 A
START WAITING MODE
N
Y
110 B
F ≧ F0
N
Y
110 D
BEGIN MOTOR ASSIST
120
START TORQUE SLIDE CONTROL
120 A
TIMER START t
120 B
S = 0
N
Y
120 C
t ≧ 3sec
N
N
Y
120 E
120 D
F0 + α ⇒ F0
F0 ⇒ F0
102
STOPPING PROCESS
END

FIG. 7

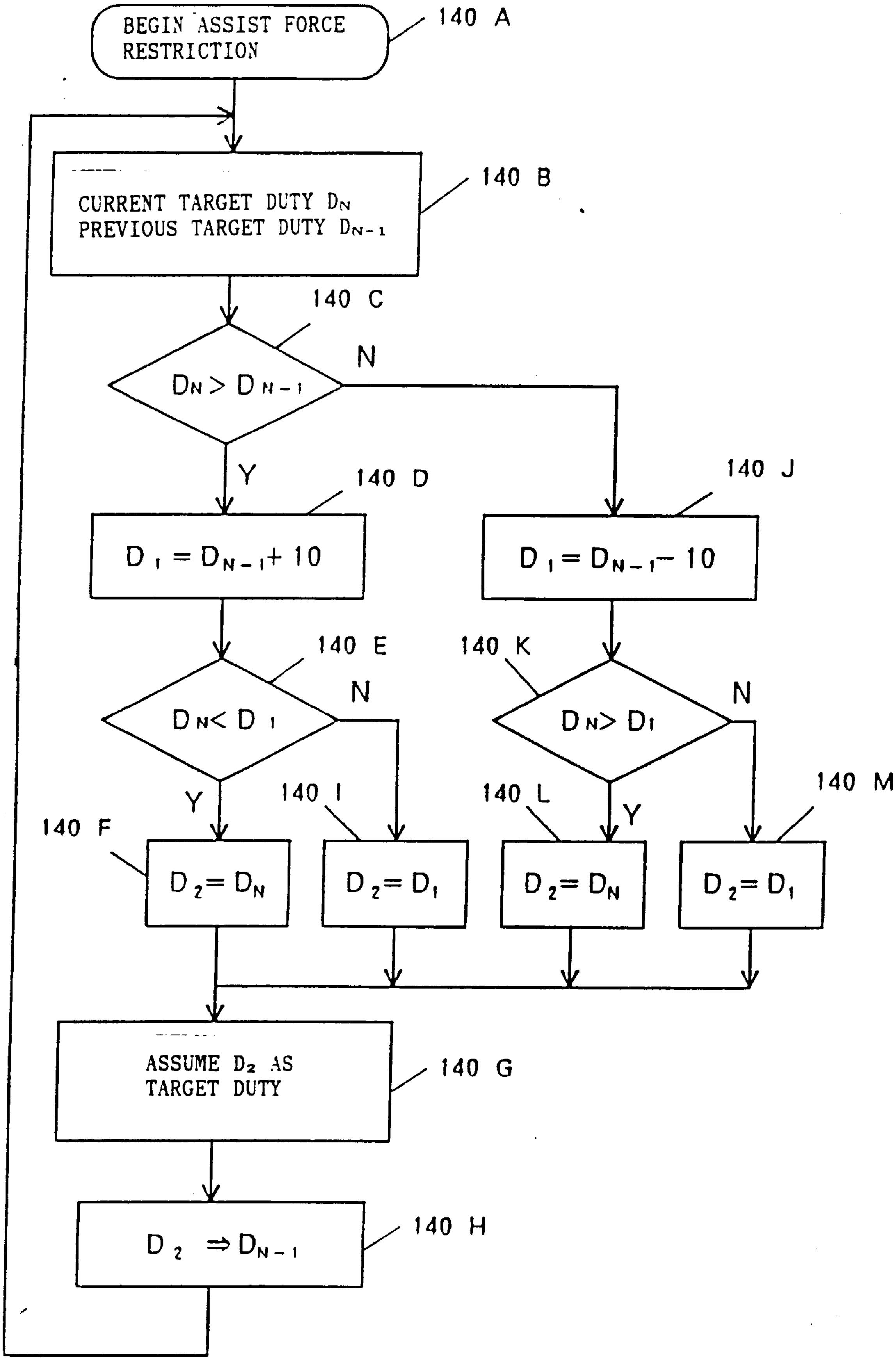
BEGIN ASSIST FORCE RESTRICTION
140 A
CURRENT TARGET DUTY DN
PREVIOUS TARGET DUTY DN-1
140 B
140 C
DN > DN-1
N
Y
140 D
D1 = DN-1 + 10
140 J
D1 = DN-1 − 10
140 E
DN < D1
N
Y
140 K
DN > D1
N
Y
140 F
D2 = DN
140 I
D2 = D1
140 L
D2 = DN
140 M
D2 = D1
ASSUME D2 AS TARGET DUTY
140 G
D2 ⇒ DN-1
140 H

FIG. 8

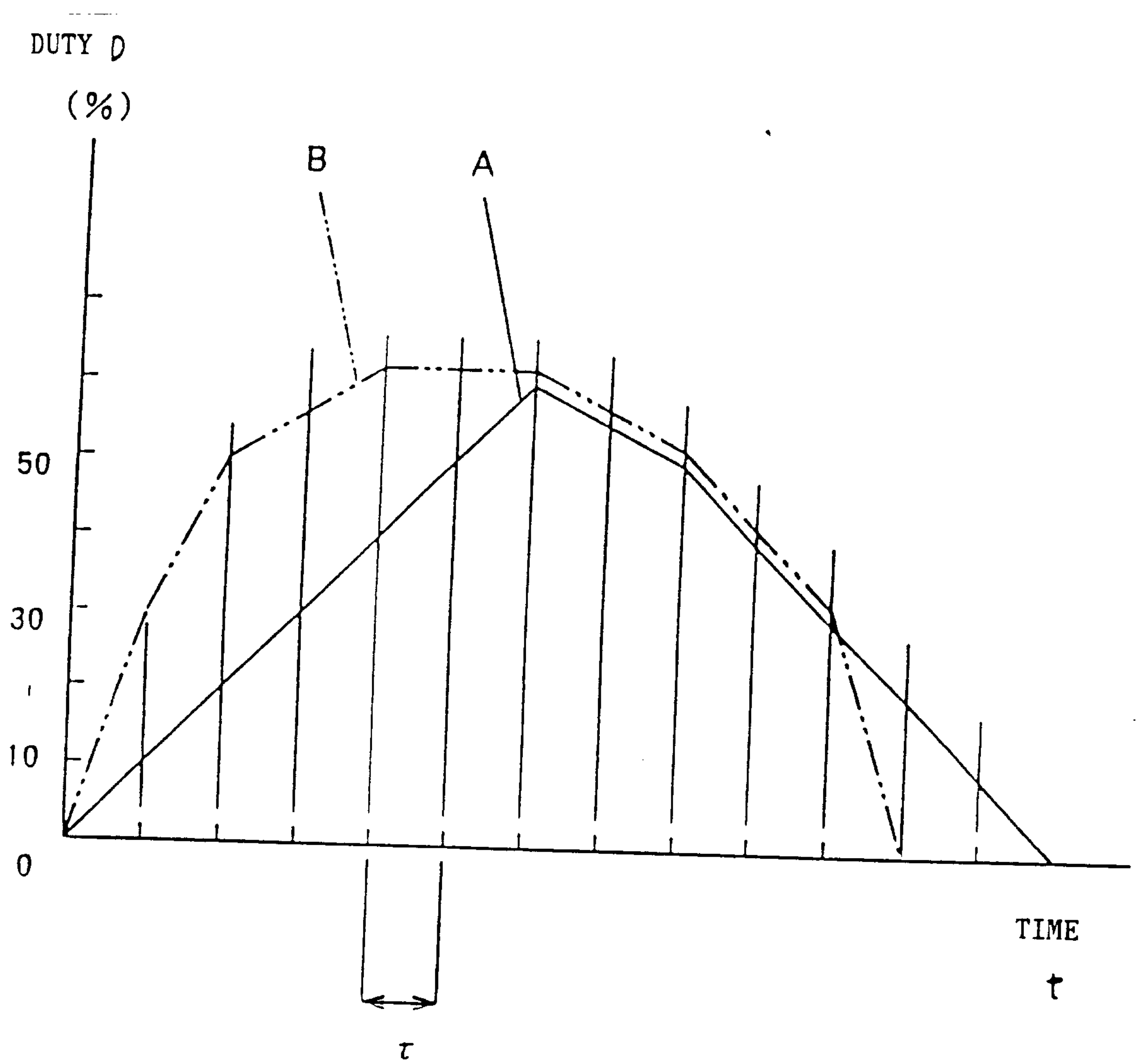

FIG. 9

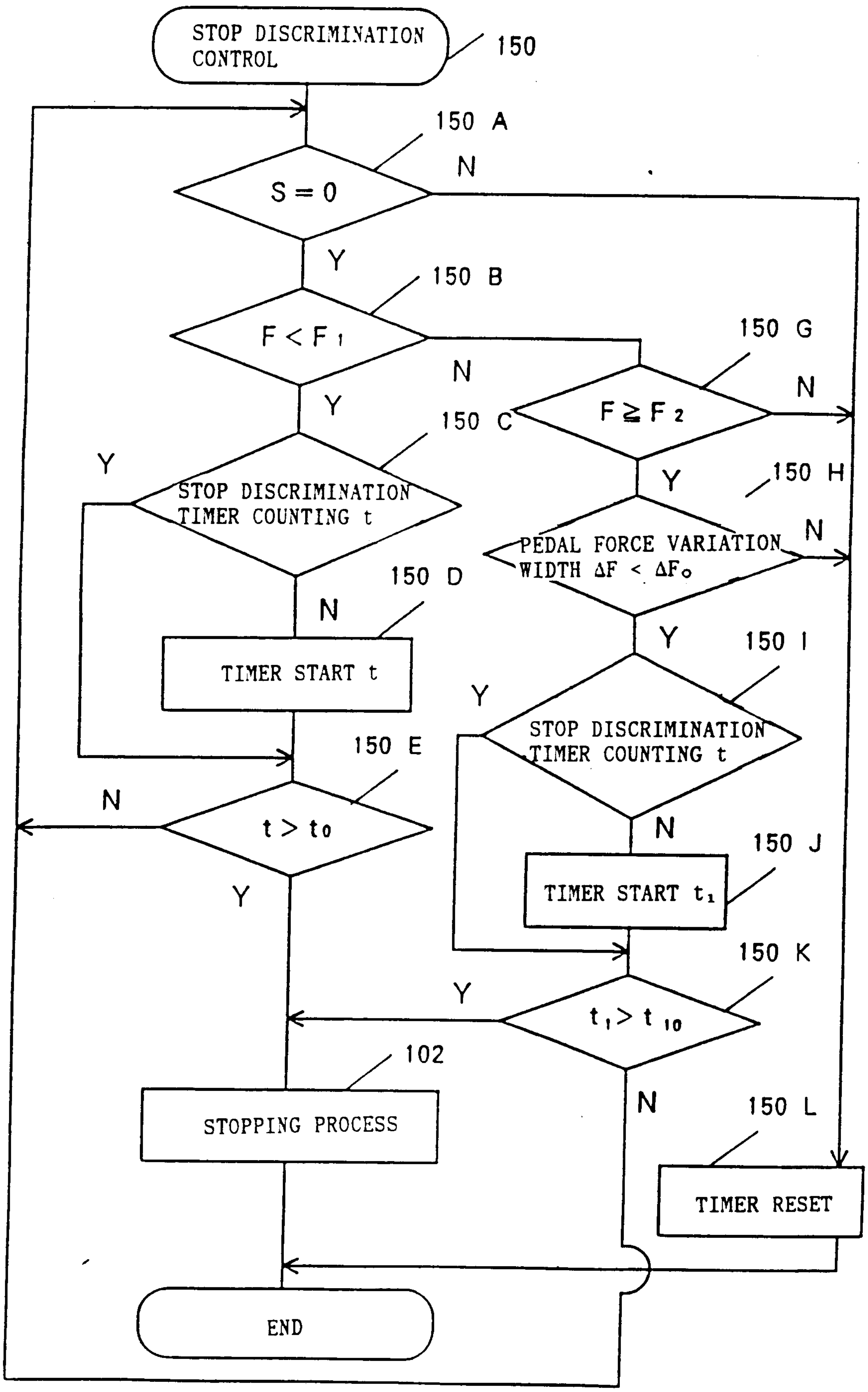
STOP DISCRIMINATION CONTROL
150
150 A
S = 0
N
Y
150 B
F < F 1
N
150 G
F ≧ F 2
N
Y
150 C
STOP DISCRIMINATION TIMER COUNTING t
Y
N
150 H
PEDAL FORCE VARIATION WIDTH ΔF < ΔF0
N
Y
150 D
TIMER START t
150 I
STOP DISCRIMINATION TIMER COUNTING t
Y
N
150 E
t > t0
N
Y
150 J
TIMER START t1
150 K
t1 > t10
Y
N
102
STOPPING PROCESS
150 L
TIMER RESET
END

FIG. 10

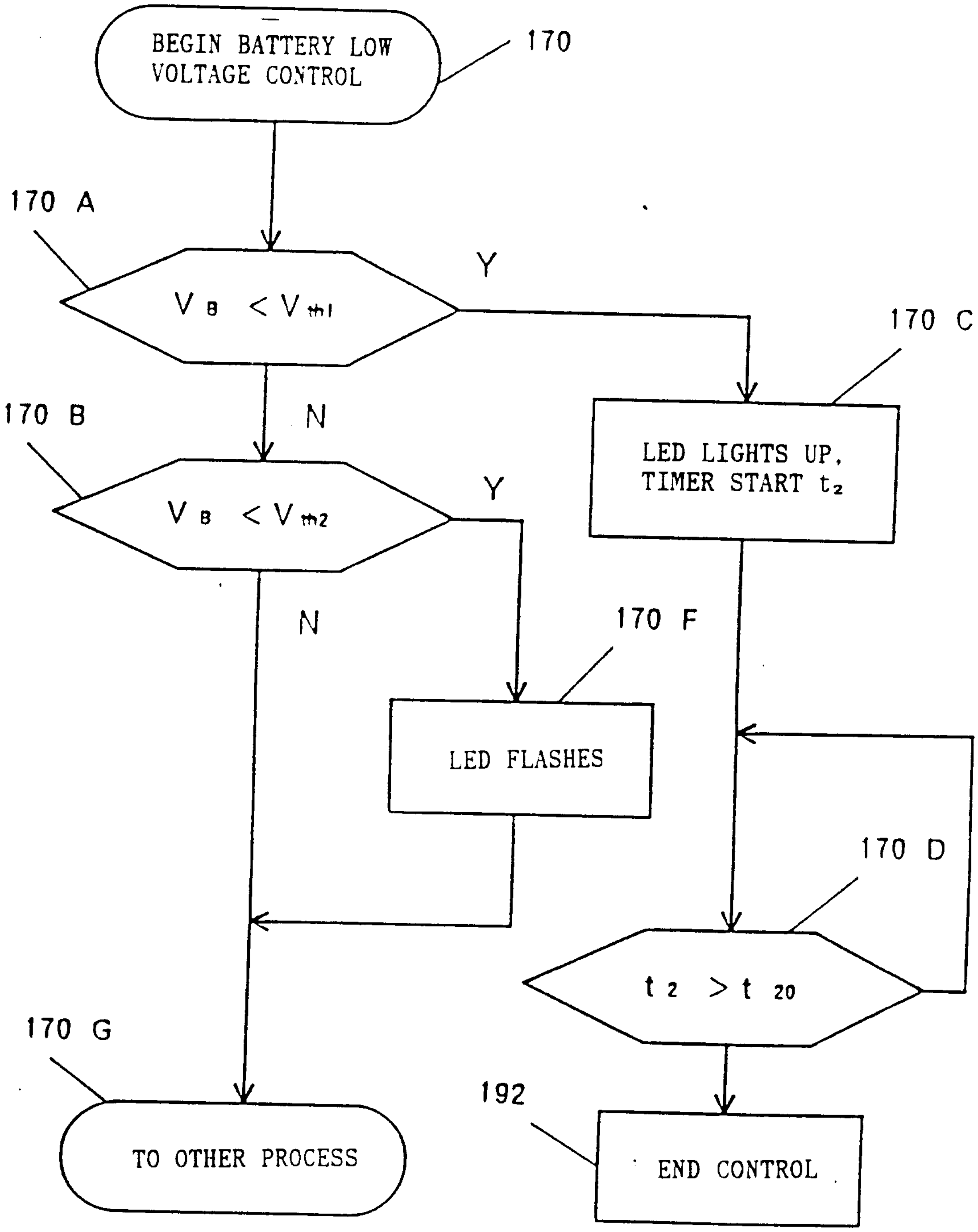
BEGIN BATTERY LOW VOLTAGE CONTROL
170
170 A
$V_B < V_{th1}$
Y
N
170 C
LED LIGHTS UP, TIMER START $t_2$
170 B
$V_B < V_{th2}$
Y
N
170 F
LED FLASHES
170 D
$t_2 > t_{20}$
170 G
TO OTHER PROCESS
192
END CONTROL

FIG. 11

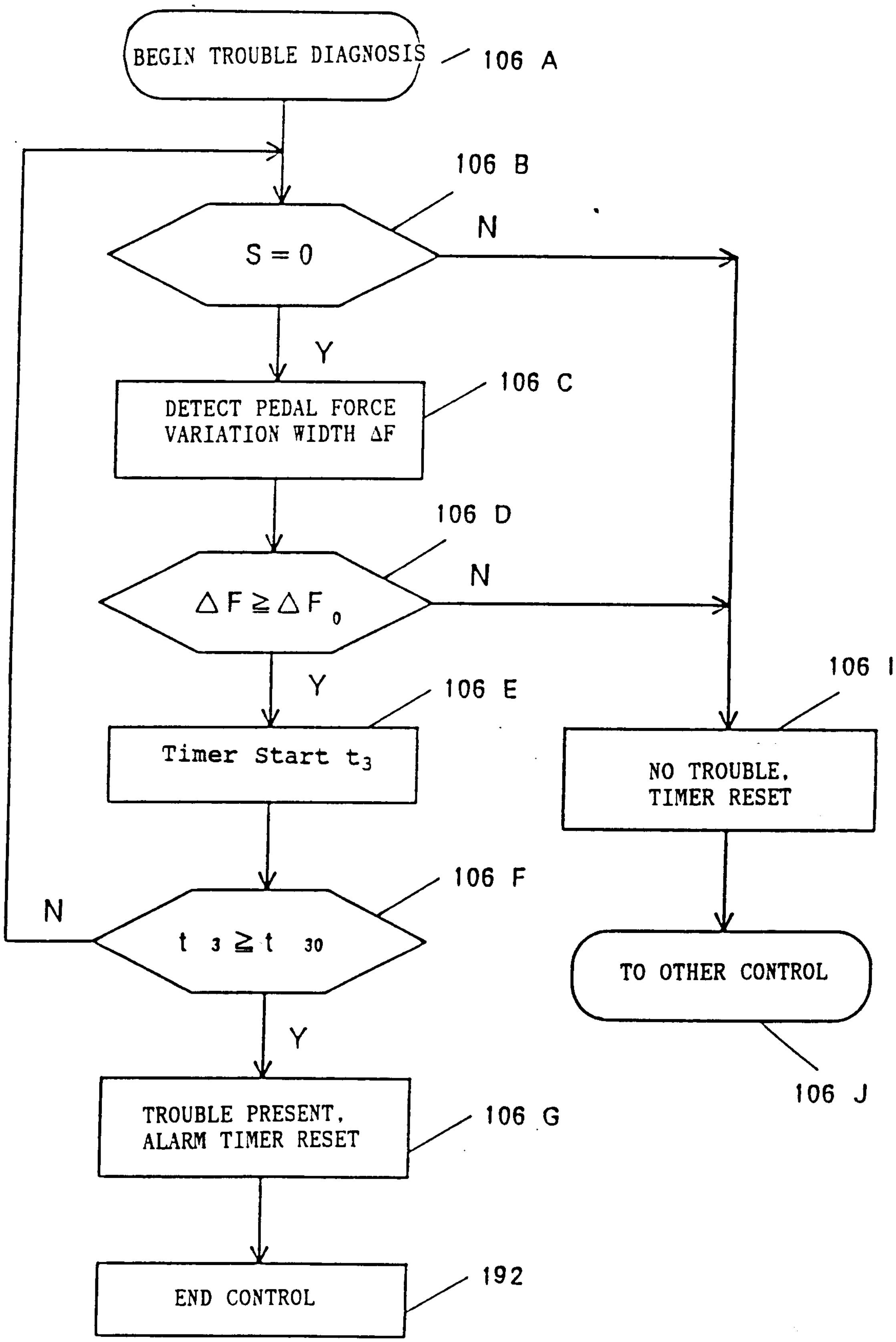
BEGIN TROUBLE DIAGNOSIS
106 A
106 B
S = 0
N
Y
DETECT PEDAL FORCE VARIATION WIDTH ΔF
106 C
106 D
ΔF ≧ ΔF0
N
Y
106 E
Timer Start t3
106 I
NO TROUBLE, TIMER RESET
106 F
N
t3 ≧ t30
TO OTHER CONTROL
Y
106 J
TROUBLE PRESENT, ALARM TIMER RESET
106 G
END CONTROL
192

FIG. 12

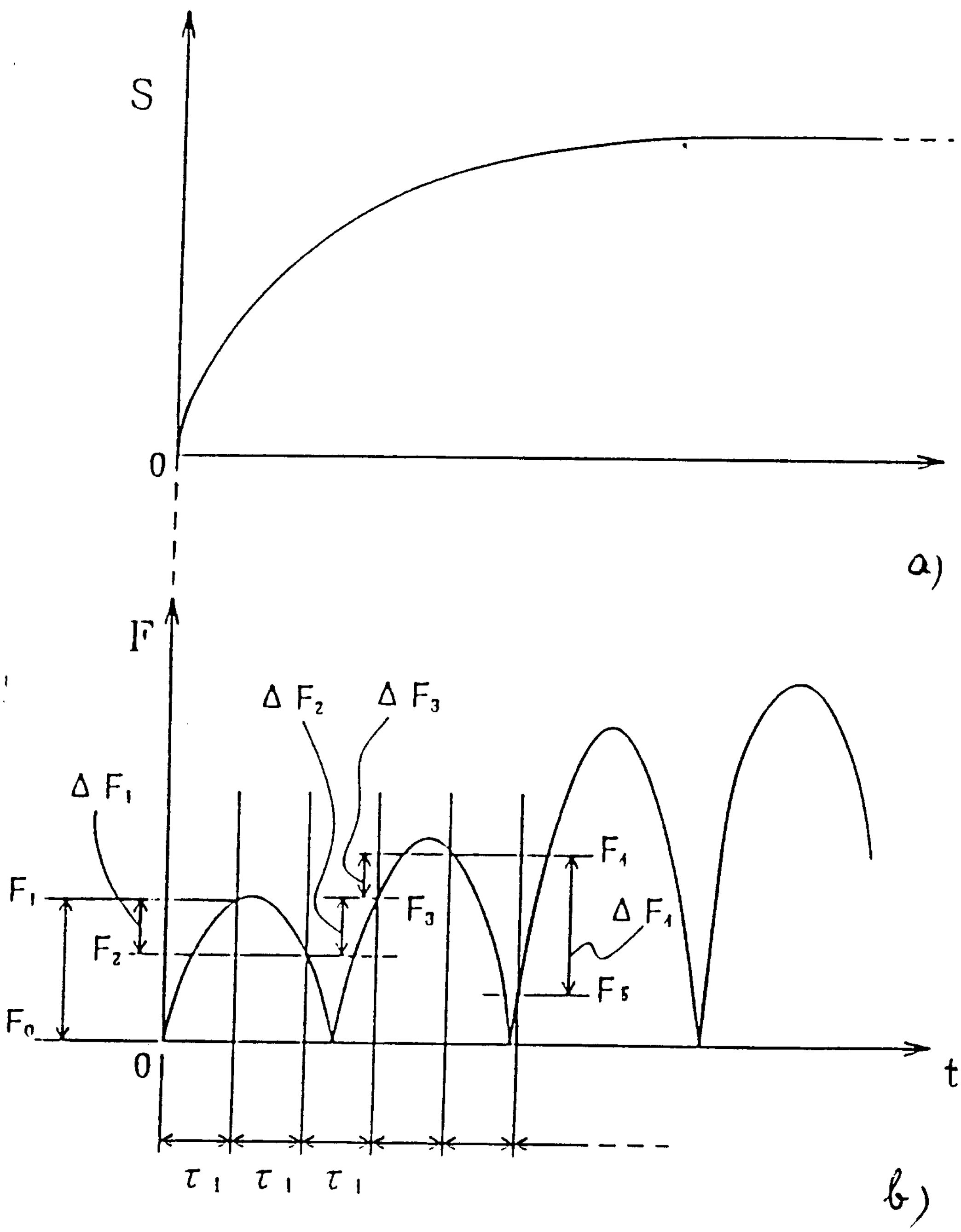

FIG. 13

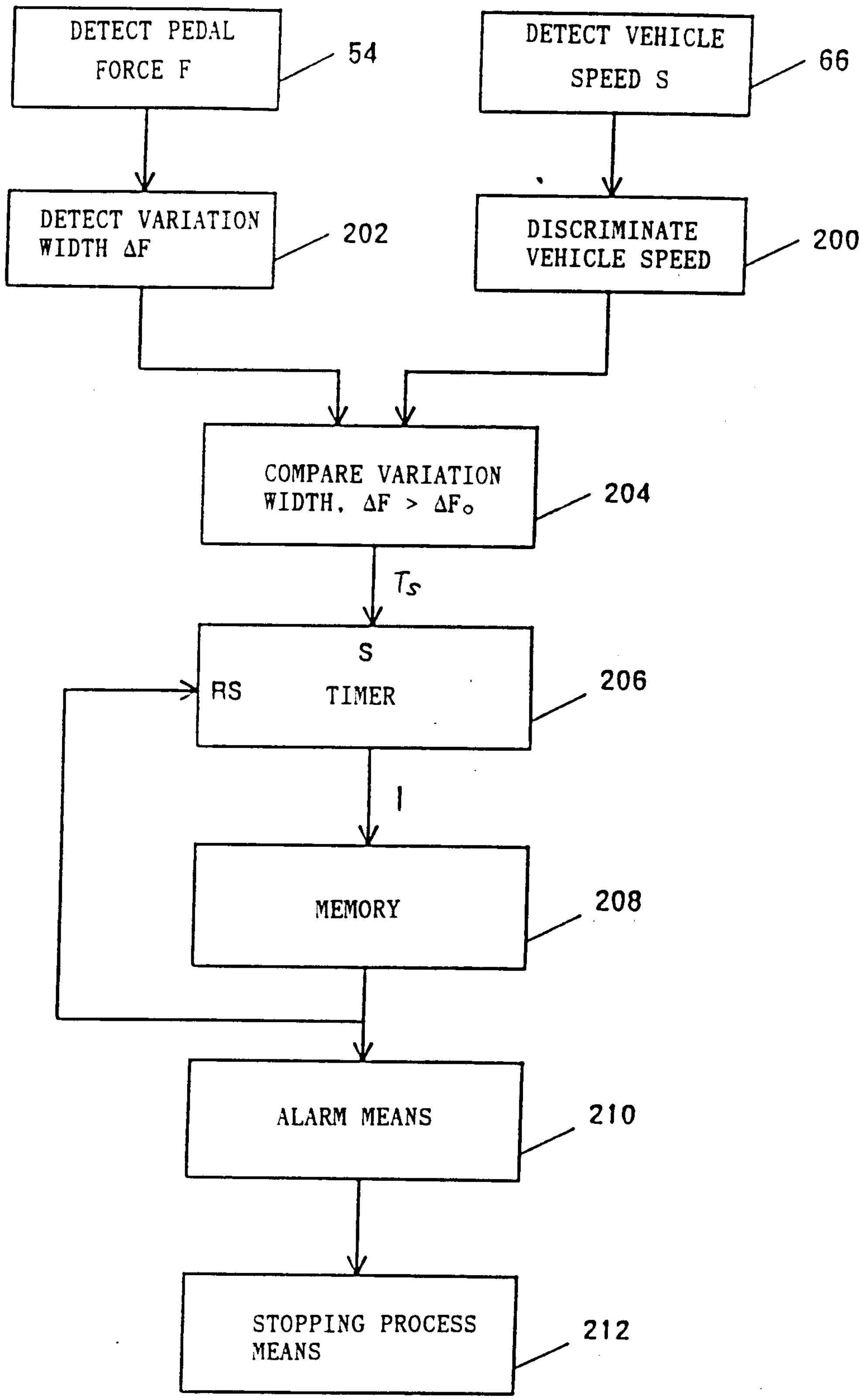
DETECT PEDAL FORCE F
54
DETECT VEHICLE SPEED S
66
DETECT VARIATION WIDTH ΔF
202
DISCRIMINATE VEHICLE SPEED
200
COMPARE VARIATION WIDTH, ΔF > ΔFo
204
Ts
S
RS
TIMER
206
I
MEMORY
208
ALARM MEANS
210
STOPPING PROCESS MEANS
212